# EUROPÄISCHE PATENTSCHRIFT

(11) **EP 1 900 563 B1**
(45) Veröffentlichungstag und Bekanntmachung des Hinweises auf die Patenterteilung: **04.11.2015**
(21) Anmeldenummer: 07017628.4
(22) Anmeldetag: 08.09.2007
(51) Int. Cl.: B60J 7/22

(54) **Windstopeinrichtung**
Wind stop device
Dispositif pare vent

(30) Priorität: 12.09.2006 DE 102006043626
(43) Veröffentlichungstag der Anmeldung: 19.03.2008
(73) Patentinhaber: Scambia Holdings Cyprus Limited, 3106 Limassol (CY)
(72) Erfinder: Riehle, Jörg, 71679 Asperg (DE); Neumann, Peter, 71720 Oberstenfeld (DE)
(74) Vertreter: Hoeger, Stellrecht & Partner Patentanwälte mbB

(56) Entgegenhaltungen:
- EP-A2- 1 621 386
- DE-A1- 4 338 102
- DE-U1- 29 615 342

## Beschreibung

Die Erfindung betrifft eine Windstopeinrichtung für Kraftfahrzeuge, insbesondere Cabriofahrzeuge, umfassend eine in Höhe einer Gürtellinie einer Karosserie angeordnete Windstopbasis und ein mit der Windstopbasis gelenkig verbundenes Windschott, welches von einer sich ungefähr in Höhe der Gürtellinie der Karosserie erstreckenden unwirksamen Stellung in eine sich über die Gürtellinie erhebende und quer zu dieser verlaufenden wirksamen Stellung verschwenkbar ist, und eine elektrische Antriebseinheit, mit welcher das Windschott zwischen der unwirksamen Stellung und der wirksamen Stellung relativ zur Windstopbasis bewegbar ist.

Derartige Windstopeinrichtungen sind aus dem Stand der Technik, beispielsweise der DE 4338102 A, bzw. der DE 296 15 342 U1, bekannt.

Bei diesen Windstopeinrichtungen besteht das Problem, dass die elektrische Versorgung des Windschotts aufwändige Maßnahmen erfordert.

Der Erfindung liegt daher die Aufgabe zugrunde, eine Windstopeinrichtung der gattungsgemäßen Art derart zu verbessern, dass diese möglichst einfach handhabbar ist, insbesondere möglichst einfach am Kraftfahrzeug montierbar und demontierbar ist.

Diese Aufgabe wird bei einer Windstopeinrichtung der eingangs beschriebenen Art erfindungsgemäß dadurch gelöst, dass die Windstopeinrichtung mit einem elektrischen Energiespeicher versehen ist, der elektrische Energie zum Betreiben der elektrischen Antriebseinheit zur Verfügung stellt.

Der Vorteil der erfindungsgemäßen Lösung ist darin zu sehen, dass diese Windstopeinrichtung völlig autark ist und somit keinerlei Notwendigkeit besteht, bei der Montage derselben oder der Demontage derselben eine Verbindung zu einer Energiequelle, beispielsweise dem Bordnetz des Kraftfahrzeugs, herzustellen oder zu trennen.

Vielmehr lässt sich eine derartige Windstopeinrichtung in gleicher Weise wie eine konventionelle handbedienbare Windstopeinrichtung montieren, bietet jedoch den Vorteil, dass bei dieser das Windschott relativ zur Windstopbasis elektrisch zwischen der unwirksamen Stellung und der wirksamen Stellung hin und her bewegbar ist.

Der Energiespeicher ist beispielsweise ein Akkumulator oder eine Batterie.

Um ein Nachladen des mindestens einen Energiespeichers zu vermeiden und diesen stets möglichst weitgehend aufgeladen zu haben, ist vorteilhafterweise vorgesehen, dass die Windstopeinrichtung mit Solarzellen versehen ist, mit welchen der mindestens eine elektrische Energiespeicher aufladbar ist.

Um eine optimale Aufladung der elektrischen Energiespeicher mit den Solarzellen zu ermöglichen, ist es günstig, wenn die Solarzellen auf einer der Karosserie abgewandten Seite der Windstopeinrichtung angeordnet sind.

Eine vorteilhafte Lösung sieht dabei vor, dass die Solarzellen im Bereich des Windschotts angeordnet sind.

Dabei könnten die Solarzellen in jedem Bereich des Windschotts, beispielsweise auch in einem inneren Bereich des Windschotts angeordnet sein.

Eine günstige Lösung sieht jedoch vor, dass das Windschott einen Rahmen aufweist, und dass die Solarzellen an dem Rahmen des Windschotts gehalten sind.

Die Solarzellen könnten dabei an dem Rahmen so gehalten sein, dass sie sich über eine Rahmenöffnung erstrecken.

Eine optisch und hinsichtlich der Praktikabilität vorteilhafte Lösung sieht vor, dass die Solarzellen an dem Rahmen angeordnet sind.

Bei einem vorteilhaften Ausführungsbeispiel ist dabei vorgesehen, dass die Solarzellen in einem Rahmenbereich angeordnet sind.

Dabei könnten die Solarzellen auf dem Rahmen, das heißt auf einer Oberfläche des Rahmens, montiert sein. Eine hinsichtlich des Schutzes der Solarzellen günstige Lösung sieht dabei vor, dass die Solarzellen in eine Oberseite des Rahmens integriert sind.

Alternativ oder ergänzend ist bei einem weiteren Ausführungsbeispiel vorgesehen, dass die Solarzellen im Bereich der Windstopbasis angeordnet sind.

Die Solarzellen können dabei grundsätzlich an jeder Seite der Windstopbasis angeordnet sein.

Um einen optimalen Lichteinfall zu erhalten ist vorzugsweise vorgesehen, dass die Solarzellen auf einer der Karosserie abgewandten Seite der Windstopbasis angeordnet sind.

Die Anordnung der Solarzellen an der Windstopbasis kann grundsätzlich beliebig erfolgen. Ein vorteilhaftes Ausführungsbeispiel sieht vor, dass die Windstopbasis einen Rahmen aufweist und dass die Solarzellen an dem Rahmen gehalten sind.

Bei dieser Lösung könnten die Solarzellen über den Rahmen überstehen, beispielsweise sich über eine Rahmenöffnung erstrecken, so lange sie von dem Rahmen gehalten sind.

Eine aus ästhetischen Gründen günstige Lösung sieht vor, dass die Solarzellen an oder auf dem Rahmen angeordnet sind, das heißt, dass diese unmittelbar an oder auf dem Rahmen sitzen.

Eine Anordnung der Solarzellen an dem Rahmen könnte dabei bedeuten, dass die Solarzellen über den gesamten Rahmen verteilt sind. Eine günstige Lösung sieht vor, dass die Solarzellen an einem Rahmenträger des Rahmens der Windstopbasis angeordnet sind. Bei dieser Lösung lässt sich durch Auswahl eines geeigneten Rahmenträgers eine ästhetisch besonders ansprechende Variante finden.

Eine weitere vorteilhafte Lösung sieht vor, dass der Rahmen Rahmenöffnungen aufweist und dass die Solarzellen im Bereich der Rahmenöffnungen angeordnet sind. Bei dieser Lösung besteht die Möglichkeit, die ohnehin vorhandene Rahmenöffnung dazu auszunutzen, Solarzellen mit ausreichend großer Oberfläche ohne Änderung der bisher bekannten Windstopeinrichtungen günstig anzuordnen.

Dabei könnten die Solarzellen selbst einen Rahmeneinsatz bilden.

Vorzugsweise ist dabei vorgesehen, dass die Solarzellen durch ein die Rahmenöffnungen überdeckendes Flachmaterial abgedeckt sind. Diese Lösung hat den Vorteil, dass sich die Solarzellen optisch in im Wesentlichen unauffälliger Weise an der Windstopeinrichtung anbringen lassen, da durch das Flachmaterial der optische Eindruck bei Draufsicht auf die Windstopbasis geprägt wird und dadurch, dass das Flachmaterial die Solarzellen überdeckt, deren Oberfläche unauffällig wird.

Um stets einen ausreichenden Lichteinfall an den Solarzellen zu haben, ist vorzugsweise vorgesehen, dass das Flachmaterial zumindest teilweise lichtdurchlässig ist.

Es besteht sogar die Möglichkeit, das Flachmaterial so auszubilden, dass dieses in dem Bereich, in dem dieses die Solarzellen überdeckt, mit einer gegenüber anderen Flachmaterialbereichen höheren Lichtdurchlässigkeit versehen ist.

Eine Variation der Lichtdurchlässigkeit des Flachmaterials im Bereich der Solarzellen lässt sich insbesondere dadurch erreichen, dass das Flachmaterial in seinem die Solarzellen überdeckenden Bereich eine gegenüber anderen Bereichen geringere Fadendichte aufweist. Das heißt, dass dadurch zwischen den Fäden des Flachmaterials mehr Freiraum für das durchfallende Licht verbleibt.

Hinsichtlich der Anordnung der Solarzellen selbst wurden im Zusammenhang mit der bisherigen Erläuterung der einzelnen Ausführungsbeispiele keine näheren Angaben gemacht. So sieht ein vorteilhaftes Ausführungsbeispiel vor, dass die Solarzellen an einem Trägergehäuse angeordnet sind.

Die Solarzellen können dabei in einfacher Weise auf dem Trägergehäuse angeordnet werden. Noch besser ist es jedoch, wenn die Solarzellen in eine Oberseite des Trägergehäuses integriert sind, das heißt in der Oberseite des Trägergehäuses geschützt angeordnet sind, beispielsweise dadurch, dass sie in der Oberseite des Trägergehäuses vertieft gegenüber diese umgebenden Strukturen angeordnet sind.

Hinsichtlich der Anordnung des Trägergehäuses an dem Rahmen bestehen die unterschiedlichsten Möglichkeiten.

Im einfachsten Fall ist vorgesehen, dass das Trägergehäuse an dem Rahmen fixiert ist, so dass das Trägergehäuse beim Verstauen der Windstopeinrichtung automatisch an dem Rahmen verbleibt.

Um jedoch die Möglichkeit zu schaffen, unterschiedliche Windstopeinrichtungen mit einem Trägergehäuse zu versehen, ist vorzugsweise vorgesehen, dass das Trägergehäuse lösbar an dem Rahmen fixiert ist.

Unter einer derartigen lösbaren Fixierung des Trägergehäuses an dem Rahmen ist jede Art von nachträglichen und lösbaren, das heißt auswechselbaren Fixierungen von Trägergehäusen zu verstehen.

In einem derartigen Fall ist dann das Trägergehäuse ein separates, an dem Rahmen befestigbares Element.

Ein derartiges Trägergehäuse muss jedoch nicht nur dazu eingesetzt werden, die Solarzellen zu tragen, sondern das Trägergehäuse kann in vielfacher Art und Weise noch zusätzlich eingesetzt werden.

So sieht eine vorteilhafte Lösung vor, dass der mindestens eine elektrische Energiespeicher in dem Trägergehäuse angeordnet ist.

Eine weitere vorteilhafte Lösung sieht vor, dass eine Steuereinheit in dem Trägergehäuse angeordnet ist, welche mindestens den Ladezustand des elektrischen Energiespeichers durch die Solarzellen überwacht und steuert.

Insbesondere im Falle einer zusammenfaltbaren Windstopeinrichtung ist vorzugsweise vorgesehen, dass die Windstopbasis zwei Windstopbasisteile aufweist und dass das Trägergehäuse für die Solarzellen mindestens an einem der Windstopbasisteile gehalten ist.

Alternativ oder ergänzend zum Vorsehen eines separaten Trägergehäuses zum Anordnen der Solarzellen sieht ein weiteres Ausführungsbeispiel vor, dass ein Rahmen der Windstopbasis einen Trägerbereich für die Solarzellen bildet.

Dabei sind im Rahmen der erfindungsgemäßen Lösung eine Vielzahl von Freiheitsgraden gegeben, die es ermöglichen, den Rahmen so auszubilden, dass dessen Trägerbereich zum Aufnehmen der Solarzellen geeignet ist.

Beispielsweise ist es dabei denkbar, den Trägerbereich des Rahmens als im Querschnitt abgeflachten, jedoch verbreiterten Bereich eines Rahmenträgers auszubilden.

Ferner ist vorzugsweise vorgesehen, dass der Rahmen ein Gehäuse für den elektrischen Energiespeicher bildet.

In diesem Fall könnte beispielsweise der Trägerbereich so ausgebildet sein, dass er ein Gehäuse für den elektrischen Energiespeicher bildet. Es besteht aber auch die Möglichkeit, den Rahmen in anderen Bereichen so auszubilden, dass dieser in der Lage ist, den elektrischen Energiespeicher aufzunehmen.

Hinsichtlich der Art der Steuerung der erfindungsgemäßen Windstopeinrichtung wurden bislang keine weiteren Angaben gemacht.

Zum effizienten Betrieb ist es zweckmäßig, wenn die Windstopeinrichtung eine Steuereinheit umfasst, welche mindestens einen Ladezustand des mindestens einen Energiespeichers überwacht.

Ferner ist es alternativ oder ergänzend günstig, wenn der Rahmen ein Gehäuse für die Steuereinheit bildet. Auch zum Aufnehmen der Steuereinheit ist es nicht zwingend notwendig, den Trägerbereich so auszugestalten, dass dieser in der Lage ist, die Steuereinheit aufzunehmen. Vielmehr wäre der Rahmen an beliebiger Stelle geeignet, die Steuereinheit aufzunehmen.

Vorzugsweise ist dabei der Rahmen entweder mit einem Bereich mit ausreichend großem Querschnitt oder einem abgeflachten Bereich zur Aufnahme der Steuereinheit ausgebildet.

Hinsichtlich der Ausbildung der Steuereinheit sind viele Varianten denkbar. So sieht eine Minimalversion der Steuereinheit vor, dass diese in der Lage ist, das Windschott zwischen seiner wirksamen und seiner unwirksamen Stellung zu verschwenken und in diesen Stellungen jeweils die Antriebseinheit zu stoppen, beispielsweise durch Erfassen von Drehstellungen der Antriebseinheit.

Noch vorteilhafter ist es jedoch, wenn die Steuereinheit eine Funktionssteuerung für das Windschott umfasst.

Eine derartige Funktionssteuerung sieht beispielsweise vor, dass durch geeignete manuelle Eingaben komplette Funktionsabläufe bei der Bewegung des Windschotts realisierbar sind.

Beispielsweise wäre es denkbar, die Funktionssteuerung so auszubilden, dass diese bei einem einmaligen Befehl das Windschott in die geeignete vorgegebene Stellung kippt.

Um in einfacher Weise die Funktionssteuerung ansprechen zu können, ist vorzugsweise vorgesehen, dass die Funktionssteuerung mit einer Handbedieneinheit kommuniziert.

Eine andere vorteilhafte Lösung sieht vor, dass die Funktionssteuerung mit einer fest an der Windstopeinrichtung angeordneten Handbedieneinheit kommuniziert.

Die Steuereinheit kann in unterschiedlichster Weise an der Windstopeinrichtung angeordnet sein.

So wäre es denkbar, die Steuereinheit in einem separaten, an der Windstopeinrichtung angeordneten Gehäuse, beispielsweise zusammen mit der Handbedieneinheit, vorzusehen.

Aus Gründen einer optisch gefälligen Gestaltung ist die Steuereinheit in dem Trägergehäuse angeordnet.

Alternativ oder ergänzend dazu ist die Steuereinheit in einem Rahmen der Windstopeinrichtung angeordnet.

Die Handbedieneinheit kann an beliebiger Stelle der Windstopeinrichtung, insbesondere am Windschott selbst oder an der Windstopbasis, angeordnet werden.

Eine besonders günstige Lösung sieht vor, dass die Handbedieneinheit an der Windstopbasis angeordnet ist.

Vorzugsweise ist dabei die Handbedieneinheit an einer einem Fahrer des Fahrzeugs zugewandten Seite angeordnet.

Eine derartige Anordnung der Handbedieneinheit sieht beispielsweise vor, diese an einem vorderen Querträger der Windstopbasis, vorzugsweise auf einer dem Fahrer zugewandten Seite desselben anzuordnen.

Alternativ oder ergänzend hierzu wäre es aber auch denkbar, dass die Handbedieneinheit in dem Trägergehäuse für die Solarzellen angeordnet ist, um eine möglichst kompakte Lösung zu erhalten, die es insbesondere nicht erforderlich macht, den Rahmen entweder des Windschotts oder der Windstopbasis zu verändern.

Insbesondere ist es dabei günstig, wenn die Handbedieneinheit in dem Gehäuse für den mindestens einen Energiespeicher angeordnet ist.

Dabei kann die Funktionssteuerung mit der Handbedieneinheit in beliebiger Art und Weise kommunizieren.

Eine vorteilhafte Lösung sieht vor, dass die Funktionssteuerung drahtlos mit der Handbedieneinheit, insbesondere einer tragbaren Handbedieneinheit, kommuniziert.

Alternativ zu einer berührungslosen Wechselwirkung der Funktionssteuerung mit der tragbaren Handbedienung sieht eine weitere Lösung vor, dass die Funktionssteuerung mit einer Fahrzeugfunktionssteuerung kommuniziert, wobei die Fahrzeugfunktionssteuerung beispielsweise als Funktionssteuereinheit für eine Fahrzeugverriegelung ausgebildet sein kann.

Hierbei ist es besonders vorteilhaft, wenn die Funktionssteuerung berührungslos mit der Fahrzeugfunktionssteuerung kommuniziert.

Hinsichtlich der einzelnen Funktionen, insbesondere der Korrelation der Stellung des Windschotts mit einzelnen Funktionen des Kraftfahrzeugs, wurden bislang keine näheren Angaben gemacht.

So sieht eine vorteilhafte Lösung vor, dass die Fahrzeugfunktionssteuerung über die Funktionssteuerung der Windstopeinrichtung ein Bewegen des Windschotts von der unwirksamen Stellung in die wirksame Stellung veranlasst, wenn das Kraftfahrzeug eine vorgebbare Geschwindigkeit überschreitet.

Alternativ oder ergänzend hierzu sieht eine weitere vorteilhafte Ausführungsform vor, dass die Fahrzeugfunktionssteuerung über die Funktionssteuerung ein Bewegen des Windschotts von der unwirksamen Stellung in die wirksame Stellung veranlasst, wenn ein Verdeck des Kraftfahrzeugs geöffnet wird.

Alternativ oder ergänzend sieht eine weitere Ausführungsform vor, dass die Fahrzeugfunktionssteuerung über die Funktionssteuerung ein Bewegen des Windschotts von der wirksamen in die unwirksame Stellung veranlasst, wenn ein Rückwärtsgang eingelegt wird.

Ferner sieht eine Ausführungsform alternativ oder ergänzend zu den bisherigen Funktionen vor, dass die Fahrzeugfunktionssteuerung über die Funktionssteuerung ein Bewegen des Windschotts von der unwirksamen Stellung in die wirksame Stellung veranlasst, wenn alle Scheiben des Kraftfahrzeugs hochgefahren werden.

Schließlich sieht eine Ausführungsform alternativ oder ergänzend zu den bisherigen Lösungen vor, dass die Fahrzeugfunktionssteuerung über die Funktionssteuerung ein Bewegen des Windschotts zwischen einer unwirksamen Stellung und einer wirksamen Stellung oder umgekehrt veranlasst, wenn eine entsprechende Bedientaste am Fahrzeug betätigt wird.

Die vorstehend genannten Funktionsmodi der Funktionssteuerung können fest vorgegeben sein.

Besonders günstig ist jedoch eine Lösung bei welcher die einzelnen Funktionsmodi - einzeln oder in Gruppen oder als Gesamtheit - aktivierbar und deaktivierbar sind.

Eine weitere vorteilhafte Lösung sieht vor, dass die Handbedieneinheit in dem Gehäuse für die Steuereinheit angeordnet ist.

Hinsichtlich der Anordnung der elektrischen Antriebseinheit wurden im Zusammenhang mit der bisherigen Erläuterung der einzelnen Ausführungsbeispiele keine näheren Angaben gemacht.

So wäre es beispielsweise denkbar, die Antriebseinheit am oder im Windschott vorzusehen.

Eine konstruktiv besonders günstige Lösung sieht jedoch vor, dass die elektrische Antriebseinheit an der Windstopbasis angeordnet ist.

Aletrnativ kann die elektrische Antriebseinheit in die Windstopbasis integriert werden, um eine optisch gefällige Lösung zu erhalten.

Eine konstruktiv besonders vorteilhafte Lösung sieht vor, dass die Windstopbasis Träger aufweist und dass die elektrische Antriebseinheit in einem Bereich eines Trägers der Windstopbasis integriert ist.

Insbesondere ist vorgesehen, dass die Windstopbasis mindestens zwei Windstopbasisteile aufweist und dass die elektrische Antriebseinheit in einem der Windstopbasisteile integriert ist.

Weitere Merkmale und Vorteile der Erfindung sind Gegenstand der nachfolgenden Beschreibung sowie der zeichnerischen Darstellung einiger Ausführungsbeispiele.

In der Zeichnung zeigen:
- Fig. 1: eine perspektivische Ansicht eines ersten Ausführungsbeispiels einer erfindungsgemäßen Windstopeinrichtung in einer wirksamen Stellung des Windschotts, wobei die Windstopeinrichtung in einer ausschnittsweise dargestellten Karosserie montiert ist;
- Fig. 2: einen Schnitt Längs Linie 2-2 in Fig. 1;
- Fig. 3: eine perspektivische Darstellung ähnlich Fig. 1 in einer unwirksamen Stellung des Windschotts;
- Fig. 4: einen Schnitt längs Linie 4-4 in Fig. 3;
- Fig. 5: einen Schnitt längs Linie 5-5 in Fig. 1 durch einen an eine Trennebene angrenzenden Bereich eines vorderen Querträgers der Windstopbasis;
- Fig. 6: eine perspektivische Darstellung ähnlich Fig. 1 bei teilweise weggebrochenem Flachmaterial der Windstopbasis zur Darstellung eines Trägergehäuses für Solarzellen;
- Fig. 7: einen Schnitt längs Linie 7-7 in Fig. 6;
- Fig. 8: einen Schnitt längs Linie 8-8 in Fig. 6;
- Fig. 9: eine perspektivische Darstellung einer Handbedienung;
- Fig. 10: eine perspektivische Darstellung ähnlich Fig. 1 eines zweiten Ausführungsbeispiels einer erfindungsgemäßen Windstopeinrichtung;
- Fig. 11: einen Schnitt längs Linie 11-11 in Fig. 10;
- Fig. 12: einen Schnitt längs Linie 12-12 in Fig. 10 und
- Fig. 13: eine perspektivische Darstellung ähnlich Fig. 3 eines dritten Ausführungsbeispiels einer erfindungsgemäßen Windstopeinrichtung.

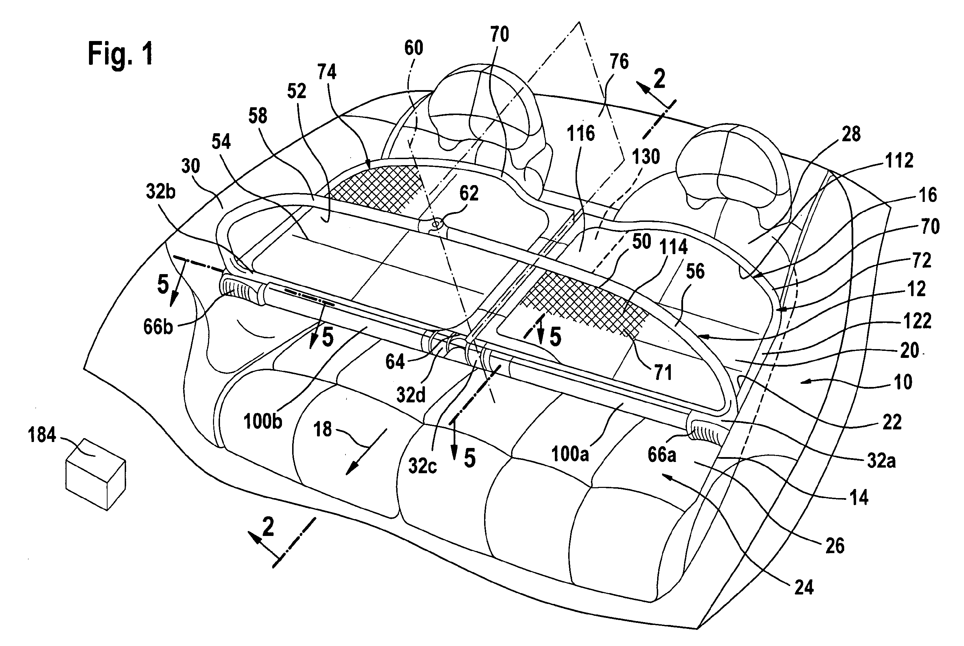

Ein in Fig. 1 dargestelltes Ausführungsbeispiel einer erfindungsgemäßen Windstopeinrichtung für Kraftfahrzeuge, insbesondere für Cabriofahrzeuge, deren Karosserie 10 in Fig. 1 ausschnittsweise dargestellt ist, umfasst ein Windschott 12, welches in seiner wirksamen Stellung in Fig. 1 dargestellt ist und in dieser Stellung über eine Gürtellinie 14 der Karosserie 10 des Kraftfahrzeugs nach oben übersteht, sowie eine Windstopbasis 16, welche bezogen auf eine Fahrtrichtung 18 einen hinter dem in seiner wirksamen Stellung stehenden Windschott 12 liegenden Teilbereich 20 einer ungefähr in Höhe der Gürtellinie 14 der angeordneten Fahrgastraumöffnung 22 abdeckt.

Beispielsweise liegt der Teilbereich 20 der Fahrgastraumöffnung 22 über einer Rücksitzanlage 24, welche eine Sitzbank 26 sowie eine Rücksitzlehne 28 aufweist.

Vorzugsweise schließt der Teilbereich 20 der Fahrgastraumöffnung 22 unmittelbar an der Rücksitzlehne 28 an und erstreckt sich in der Fahrtrichtung 18 bis zum Windschott 12 ebenfalls unter Anschluss an Karosserieseitenwände 30 im Bereich der Gürtellinie 14.

Zweckmäßigerweise sitzt das Windschott 12 in seiner wirksamen Stellung so, dass dieses im Wesentlichen unmittelbar hinter zeichnerisch in Fig. 1 nicht dargestellten Kopfstützen von Vordersitzen des Kraftfahrzeugs angeordnet ist.

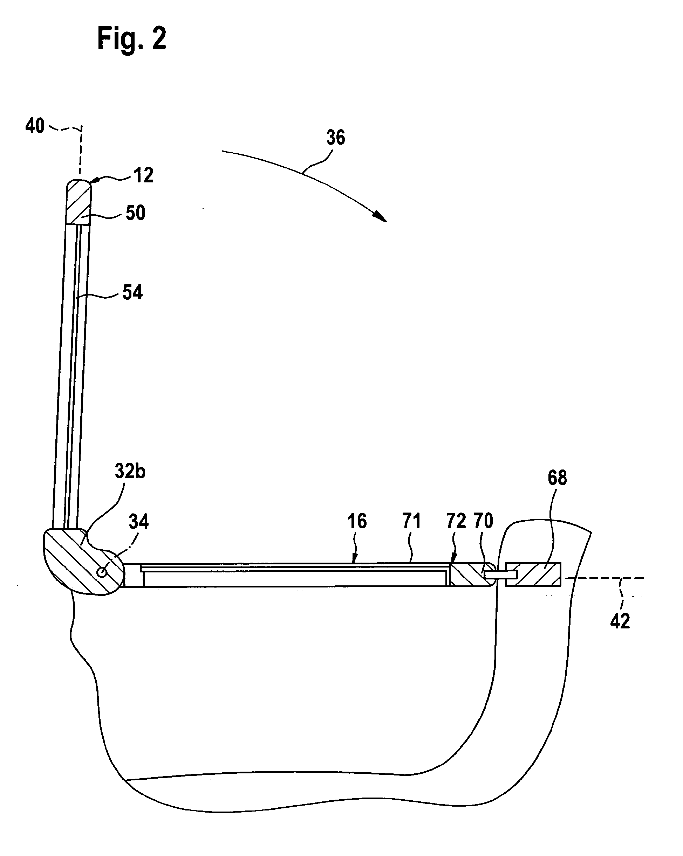

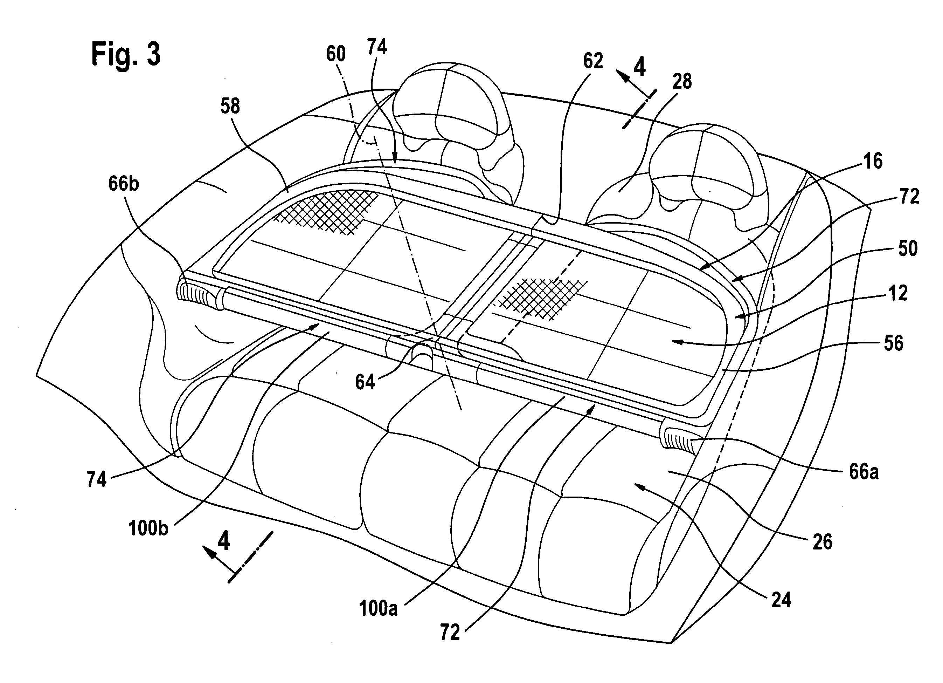

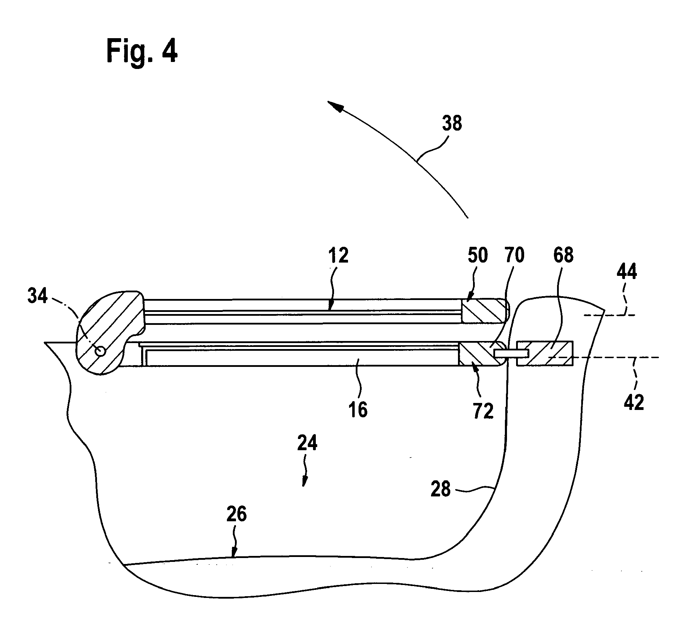

Die Windstopbasis 16 ist mit dem Windschott 12 vorzugsweise über Gelenke 32, beispielsweise Gelenke 32a, 32b, 32c und 32d um eine Achse 34, dargestellt in Fig. 2 und 4, verschwenkbar verbunden, so dass das Windschott 12 von der in Fig. 1 und 2 dargestellten wirksamen Stellung durch Schwenken um die Achse 34 in einer Schwenkrichtung 36 von seiner in Fig. 1 und 2 dargestellten wirksamen Stellung in eine in Fig. 3 und 4 dargestellte unwirksame Stellung verschwenkbar ist, in welcher das Windschott 12 sich im Wesentlichen parallel zur Windstopbasis 16 erstreckt und im Wesentlichen auf dieser aufliegend angeordnet ist.

Von dieser unwirksamen Stellung lässt sich das Windschott 12 wieder durch Verschwenken in einer Schwenkrichtung 38 um die Achse 34 in die in Fig. 1 und 2 dargestellte wirksame Stellung relativ zur Windstopbasis 16 bewegen, in welcher sich das Windschott 12 in einer Ebene 40 erstreckt, die quer zu einer Ebene 42 verläuft, in welcher sich die Windstopbasis 16 erstreckt.

Die Ebene 40 schließt dabei in der wirksamen Stellung des Windschotts 12 mit der Ebene 42 vorzugsweise einen Winkel zwischen ungefähr 60° und ungefähr 120°, noch besser einen Winkel zwischen ungefähr 70° und ungefähr 110°, ein.

Dagegen erstreckt sich das Windschott 12 in seiner unwirksamen Stellung, dargestellt in Fig. 3 und 4, in einer Ebene 44, die ungefähr parallel zur Ebene 42 verläuft.

Das Windschott 12 weist, wie insbesondere in Fig. 1 und 3 dargestellt, einen Windschottrahmen 50 auf, welcher eine Rahmenöffnung 52 umschließt, die durch einen Windschottrahmeneinsatz 54 verschlossen ist, wobei der Windschottrahmeneinsatz 54 luftdurchlässig, jedoch windhindernd ausgebildet ist, so dass er eine schnelle Luftströmung blockiert.

Der Windschottrahmen 50 kann dabei einstückig ausgebildet sein. Es ist aber auch denkbar, den Windschottrahmen 50, wie in Fig. 1 und 3 dargestellt, aus zwei Rahmenteilen 56 und 58 auszubilden, die um eine Schwenkachse 60, welche beispielsweise die Mittelachse des Windschottrahmens 50 darstellt, relativ zueinander verschwenkbar sind.

In ihrer aufgeklappten Funktionsstellung erstrecken sich die beiden Rahmenteile 56 und 58 mit maximaler Ausdehnung quer zur Fahrtrichtung 18 in der Ebene 40 oder 44, so dass die beiden Rahmenteile 56 und 58 auch den Windschottrahmeneinsatz 54 in der Ebene 40 oder 44 ausgebreitet halten.

Vorzugsweise sind die Rahmenteile 56 und 58 so ausgebildet, dass sie über Scharniere 62 und 64 miteinander verbunden sind, und sich jeweils C-förmig beiderseits der Schwenkachse 60 erstrecken, so dass in der Funktionsstellung die Rahmenöffnung 52 insgesamt von den C-förmigen Rahmenteilen 56 und 58 umschlossen und somit insbesondere im Bereich der Schwenkachse 60 nicht durch Streben geteilt ist.

Die Windstopbasis 16 ist ebenfalls aus zwei Windstopbasisteilen 72 und 74 gebildet, die im Bereich einer Trennebene 76, in welcher auch die Schwenkachse 60 liegt, aneinander angrenzen, jedoch vorzugsweise von einander trennbar sind.

Beispielsweise weist jedes der Windstopbasisteile 72, 74 einen Rahmen 70 auf, der einen Rahmeneinsatz 71 trägt.

Die Fixierung der Windstopbasis 16, insbesondere der Windstopbasisteile 72 und 74, an der Karosserie 10 erfolgt über Fixiereinrichtungen 66a und 66b sowie 68, die schematisch in den Fig. 1 bis 4 dargestellt sind.

Diese Fixiereinrichtungen 66 und 68 sind vorzugsweise mit ausfahrbaren Fixierzapfen versehen, die im Fall der Fixiereinrichtungen 66 in entsprechende Aufnahmen in den Karosserieseitenwänden 30 eingreifen und im Fall der Fixiereinrichtung 68 in eine entsprechende Aufnahme in den jeweiligen Windstopbasisteilen 72 und 74 eingreifen.

Die beiden Windstopbasisteile 72 und 74 sind jeweils über Gelenke 32a und 32c bzw. 32b und 32d mit den entsprechenden Rahmenteilen 56 bzw. 58 des Windschottrahmens 50 verbunden.

Wie exemplarisch am Beispiel des Gelenks 32c dargestellt, umfasst jedes der Gelenke einen Lagerflansch 80, welcher sich ausgehend von den jeweiligen Rahmenteilen 56 oder 58 so relativ zur Windstopbasis 16 erstreckt, dass der Lagerflansch 80 von der Achse 34 durchsetzt ist und drehbar an dem jeweiligen Windstopbasisteil 72 bzw. 74 gelagert ist.

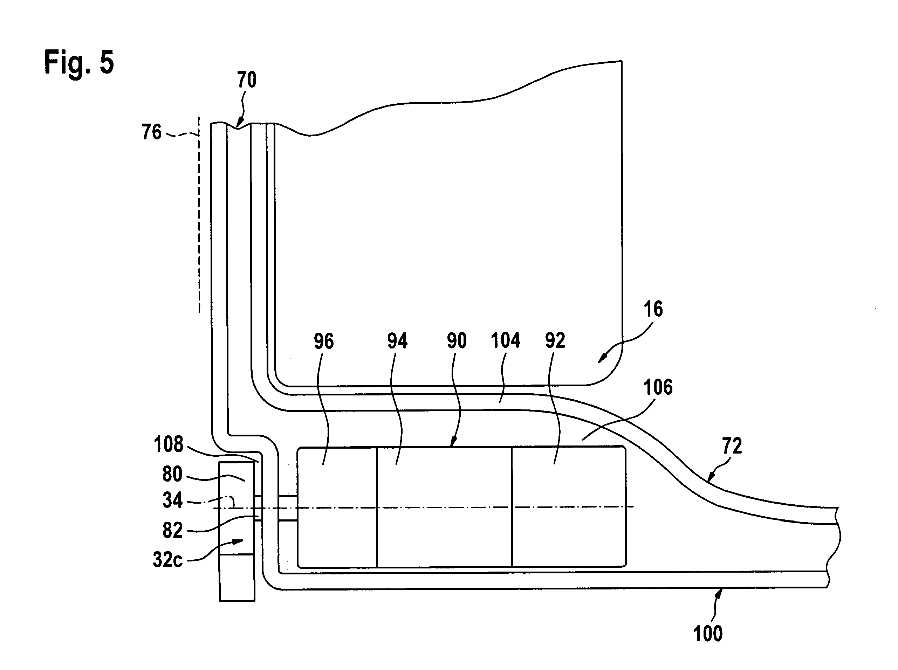

Wenn, wie in Fig. 5 dargestellt, der Lagerflansch 80 im Sinne einer Schwenkbewegung um die Achse 34 angetrieben werden soll, sitzt der Lagerflansch 80 des Gelenks 32c drehfest auf einer Welle 82, die durch eine als Ganzes mit 90 bezeichnete Antriebseinheit antreibbar ist.

Die Antriebseinheit 90 umfasst dabei vorzugsweise einen elektrischen Antriebsmotor 92 mit einem Getriebe 94 und gegebenenfalls einen Drehwinkelgeber 96, wobei ausgangsseitig des Drehwinkelgebers 96 die Welle 82 aus der Antriebseinheit 90 herausragt, auf welcher drehfest der Lagerflansch 80 sitzt.

Wie in Fig. 5 dargestellt, ist die Antriebseinheit 90 in einen vorderen Querträger 100, beispielsweise des Rahmens 70 des Windstopbasisteils 72, integriert, welcher hierzu einen erweiterten Querschnittsbereich 104 aufweist, der dadurch einen die Antriebseinheit 90 aufnehmenden Innenraum 106 bildet. Bei dem dargestellten Ausführungsbeispiel liegt der erweiterte Querschnittsbereich 104 des vorderen Querträgers 100 in unmittelbarem Anschluss an die Trennebene 76, so dass der Lagerflansch 80 nahe der Trennebene 76 angeordnet werden kann und in eine Ausnehmung 108 in dem Windstopbasisteil 72 eingreift.

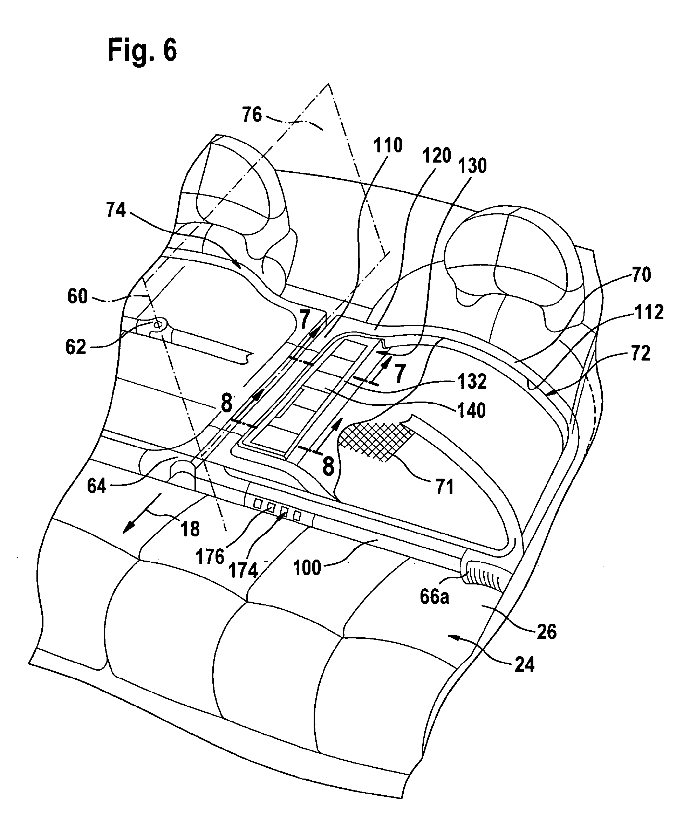

Wie in Fig. 5 und 6 dargestellt, ist an dem Windstopbasisteil 72, und zwar zwischen dem vorderen Querträger 100, einem sich an die Trennebene 76 im Anschluss erstreckenden Längsträger 110, sowie einem hinteren Querträger 120 ein Trägergehäuse 130 vorgesehen, welches sich in einer Rahmenöffnung 112 des Rahmens 70 des Windstopbasisteils 72 erstreckt, vorzugsweise längs des Längsträgers 110 vom vorderen Querträger 100 zum hinteren Querträger 120 verläuft und dabei an dem Windstopbasisteil 72 so fixiert ist, dass das Trägergehäuse 130 von oben gesehen unter einem Flachmaterial 114 liegt, welches den die Rahmenöffnung 112 verschließenden Rahmeneinsatz 71 bildet, wobei das Flachmaterial 114 an dem vorderen Querträger 100, dem Längsträger 110, dem hinteren Querträger 120 und einem äußeren Längsträger 122, die insgesamt den Rahmen 70 des Windstopbasisteils 72 bilden, fixiert und durch diese gespannt gehalten ist.

Vorzugsweise ist dabei das Flachmaterial 114 ebenfalls luftdurchlässig, jedoch windhindernd ausgebildet, so dass es eine schnelle Luftströmung ebenfalls blockiert, in gleicher Weise wie der Windschottrahmeneinsatz 54.

Das Flachmaterial 114 kann dabei ein in sich steifes Gebilde sein, es ist aber auch vorzugsweise vorgesehen, dass das Flachmaterial 114 ein textiles Flachmaterial ist, welches aufgrund seiner Struktur luftdurchlässig und zumindest partiell lichtdurchlässig ist.

Das Trägergehäuse 130 trägt auf seiner dem Flachmaterial 114 zugewandten Oberseite 132 Solarzellen 140, wobei die Solarzellen 140 weitgehend die Oberseite 132 des Trägergehäuses 130 überdecken.

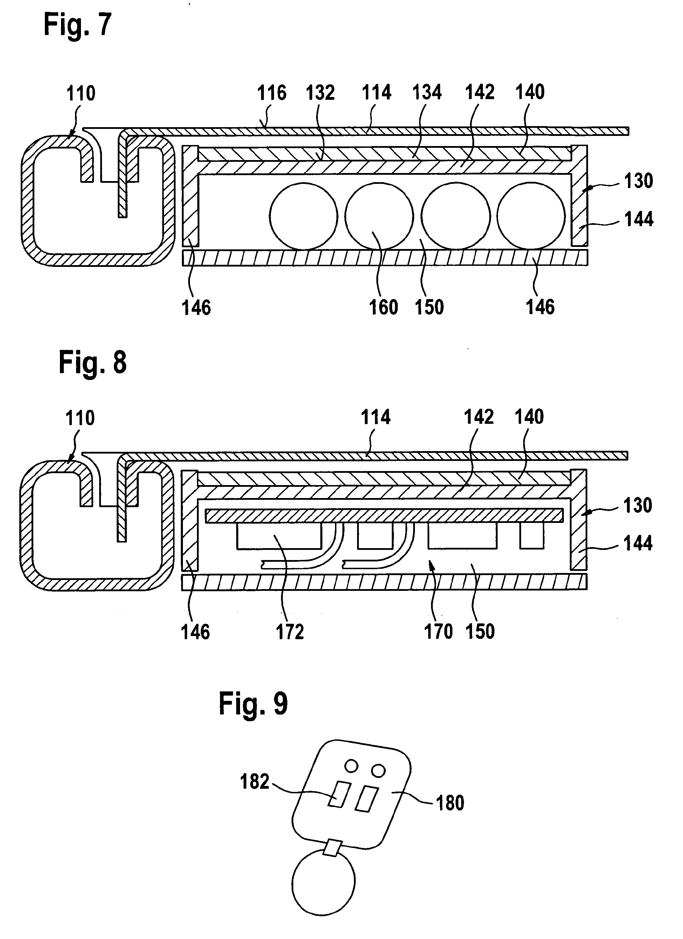

Wie in Fig. 7 schematisch dargestellt, ist die Oberseite 132 des Trägergehäuses 130 vorzugsweise mit einer Vertiefung 134 versehen, in welcher die Solarzellen 140 angeordnet und dadurch geschützt in die Oberseite 132 integriert sind.

Durch das Trägergehäuse 130 sind somit die Solarzellen 140 relativ zum Windstopbasisteil 72 fixiert angeordnet.

Durch das Trägergehäuse 130 sind die Solarzellen 140 außerdem auf einer der Karosserie 10 zugewandten Seite des Flachmaterials 114 gehalten und somit beim Blick auf das Flachmaterial 114 von oben in Richtung der Karosserie 10 nicht unmittelbar erkennbar, da für einen Betrachter zunächst der optische Eindruck einer Oberfläche des Flachmaterials 114 maßgebend ist.

Da das Flachmaterial 114 jedoch zumindest partiell lichtdurchlässig ist, insbesondere in einem sich über den Solarzellen 140 erstreckenden Bereich 116, erhalten die Solarzellen 140 ausreichend Licht, um Strom erzeugen zu können, ohne dass deren Oberfläche maßgeblich für einen von oben auf die Windstopbasis 16 blickenden Betrachter ins Auge fällt.

Die Oberseite 132 des Trägergehäuses 130 wird vorzugsweise gebildet durch eine obere Gehäusewand 142, von welcher ausgehend sich Seitenwände 144 und 146 des Trägergehäuses erstrecken, die einen im Abstand von der oberen Gehäusewand 142 verlaufenden Gehäusedeckel 148 tragen, wobei die obere Gehäusewand 142, die Seitenwände 144 und 146 sowie der Gehäusedeckel 148 einen Innenraum 150 des Trägergehäuses 130 umschließen.

In dem Innenraum 150 des Trägergehäuses 130 sind einerseits elektrische Energiespeicher 160, beispielsweise wieder aufladbare Akkumulatoren, angeordnet und andererseits eine Steuereinheit 170, welche zumindest das Aufladen der elektrischen Energiespeicher 160 durch die Solarzellen 140 steuert, so dass die Solarzellen 140 stets dann, wenn ein ausreichender Lichteinfall vorhanden ist, die elektrischen Energiespeicher 160 nachladen.

Damit steht durch die elektrischen Energiespeicher 160 stets ausreichend elektrische Leistung zur Verfügung, um den Antriebsmotor 92 zum Verschwenken des Windschotts 12 zwischen der wirksamen und der unwirksamen Stellung betreiben zu können.

Vorzugsweise ist die Steuereinheit 170 noch mit einer Funktionssteuerung 172 versehen, welche eine Bewegung des Windschotts 12 zwischen der wirksamen und unwirksamen Stellung steuert und zwar in Abhängigkeit von beispielsweise einer Handbedieneinheit 174, welche an dem vorderen Querträger 100 der Windstopbasis 16, beispielsweise dem vorderen Querträger 100 des Windstopbasisteils 72, angeordnet ist und einzelne Tasten 176 aufweist, mit denen einzelne Funktionen des Windschotts 12, insbesondere dessen Bewegen von der wirksamen Stellung in die unwirksame Stellung und umgekehrt, steuerbar sind.

Zusätzlich oder alternativ zur Handbedieneinheit 174 ist, wie in Fig. 9 dargestellt, eine Handbedienung 180 vorgesehen, welche vorzugsweise drahtlos mit der Funktionssteuerung 172 kommuniziert und ihrerseits Tasten 182 aufweist, mit welchen ebenfalls die Funktionen des Windschotts, insbesondere dessen Bewegung zwischen der wirksamen und der unwirksamen Stellung und umgekehrt, steuerbar ist.

Die Handbedienung 180 hat vorzugsweise ein einem Schlüsselanhänger entsprechendes Format, so dass der Fahrer diese wie einen Fahrzeugschlüssel aufbewahren kann und damit jederzeit, auch während der Fahrt, ohne sich umzudrehen das Windschott 12 von der unwirksamen Stellung in die wirksame Stellung oder von der wirksamen Stellung in die unwirksame Stellung verschwenken kann.

Vorzugsweise ist bei dem ersten Ausführungsbeispiel der erfindungsgemäßen Windstopeinrichtung das Trägergehäuse 130 auswechselbar an der Windstopbasis 16, insbesondere dem Windstopbasisteil 72, montierbar, so dass je nach dem, ob die Windstopeinrichtung autark, das heißt unabhängig von einem Bordnetz des Fahrzeugs, betreibbar sein soll, das Trägergehäuse 130 mit den Solarzellen 140, den Energiespeichern 160 und der Steuereinheit 170 montiert werden kann oder nicht.

Es ist aber auch möglich, eine drahtlose Verbindung zwischen der Funktionssteuerung 172 und einer Fahrzeugfunktionssteuerung 184 herzustellen.

Aufgrund der Verbindung der Funktionssteuerung 172 mit der Fahrzeugfunktionssteuerung 184 des Cabriofahrzeugs besteht nun die Möglichkeit, die Bewegung des Windschotts 12 zwischen der unwirksamen Stellung und der wirksamen Stellung entsprechend verschiedenen Funktionszuständen des Cabriofahrzeugs zu steuern.

Beispielsweise besteht die Möglichkeit, an einem Armaturenbrett des Cabriofahrzeugs Steuertasten vorzusehen, deren Betätigung durch die Fahrzeugfunktionssteuerung 184 erkennbar und in Form eines Steuersignals der Funktionssteuerung 172 übermittelbar ist.

Ferner besteht die Möglichkeit, über die Fahrzeugfunktionssteuerung 184 eine Fahrtgeschwindigkeit des Cabriofahrzeugs zu erfassen, und durch die Fahrzeugfunktionssteuerung 184 bei Überschreiten einer bestimmten vorgegebenen Geschwindigkeit der Funktionssteuerung 172 das Signal zu übermitteln, dass das Windschott 12 von der unwirksamen Stellung in die wirksame Stellung zu bewegen ist.

Ferner besteht die Möglichkeit, eine Stellung eines Getriebewahlhebels zu erfassen, und beispielsweise bei Einlegen eines Rückwärtsgangs mittels des Getriebewahlhebels das Windschott 12 von der wirksamen Stellung in die unwirksame Stellung zu überführen, um einem Fahrer eine optimale Sicht beim Rückwärtsfahren, unbehindert durch das Windschott 12, zu gewährleisten.

Ferner besteht die Möglichkeit, eine Stellung eines Verdecks des Cabriofahrzeugs zu erfassen und entsprechend der Stellung des Verdecks das Windschott 12 zu steuern, beispielsweise beim Schließen des Verdecks das Windschott 12 von der wirksamen in die unwirksame Stellung zu bewegen oder bei Öffnen des Verdecks, das heißt beispielsweise im vollständig geöffnetem Zustand des Verdecks, das Windschott 12 von der unwirksamen Stellung in die wirksame Stellung zu überführen.

Ergänzend besteht die Möglichkeit, Steuertasten für eine Fenstersteuerung abzufragen und von der Funktionssteuerung dann, wenn beispielsweise ein Signal zum Hochfahren aller Fenster des Cabriofahrzeugs gegeben wird, von der Fahrzeugfunktionssteuerung 184 der Funktionssteuerung 172 den Befehl zu übermitteln, dass in diesem Fall auch das Windschott 12 von seiner unwirksamen Stellung in seine wirksame Stellung zu bewegen ist, wobei ein Hochfahren der Fenster während der Fahrt stets dann erfolgt, wenn mit höherer Geschwindigkeit gefahren wird, um Zuglufterscheinungen im Bereich der vorderen Sitzreihe zu unterdrücken, so dass bei diesem Fahrzustand auch das Bewegen des Windschotts 12 von der unwirksamen Stellung in die wirksame Stellung sinnvoll ist, da diese Zuglufterscheinungen von einem sich bei der Fahrt im Bereich des Hecks bildenden Luftwirbel verhindert.

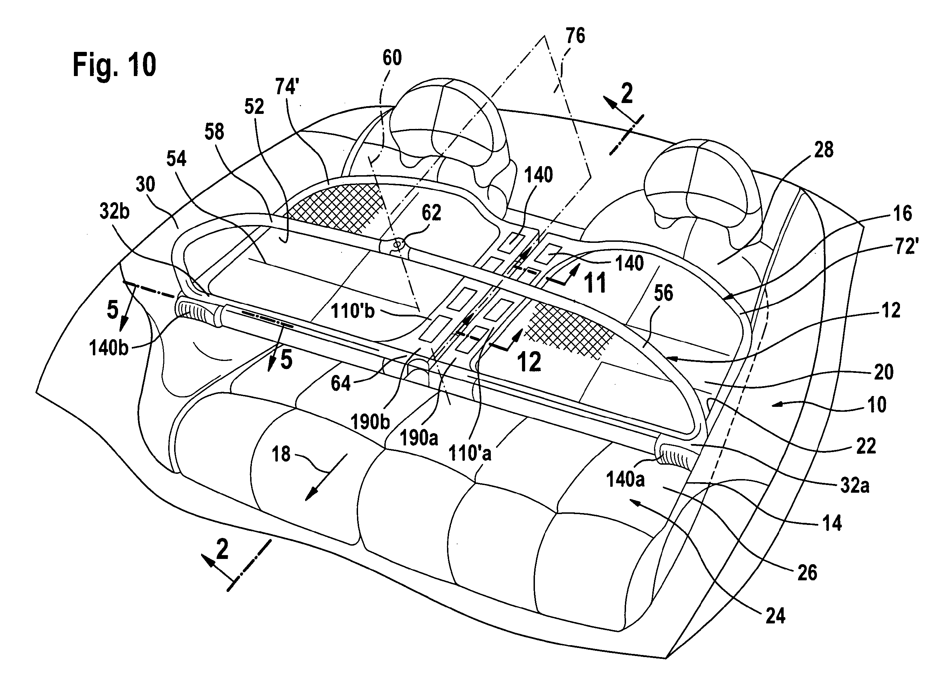

Bei einem zweiten Ausführungsbeispiel einer erfindungsgemäßen Windstopeinrichtung, dargestellt in Fig. 10, bilden die Längsträger 110'a und 110'b der Windstopbasisteile 72' und 74' das Trägergehäuse für die Solarzellen 140. Hierzu sind die Längsträger 110'a und 110'b quer zur Fahrtrichtung 18 verbreitert ausgebildet, so dass diese auf ihren Oberseiten 190a und 190b mit den Solarzellen 140 versehen werden können. Vorzugsweise sind dabei die Solarzellen 140 ebenfalls in die Oberseiten 190a und 190b der Längsträger 110'a und 110'b integriert und ergeben somit vorzugsweise einen vorteilhaften Gesamteindruck.

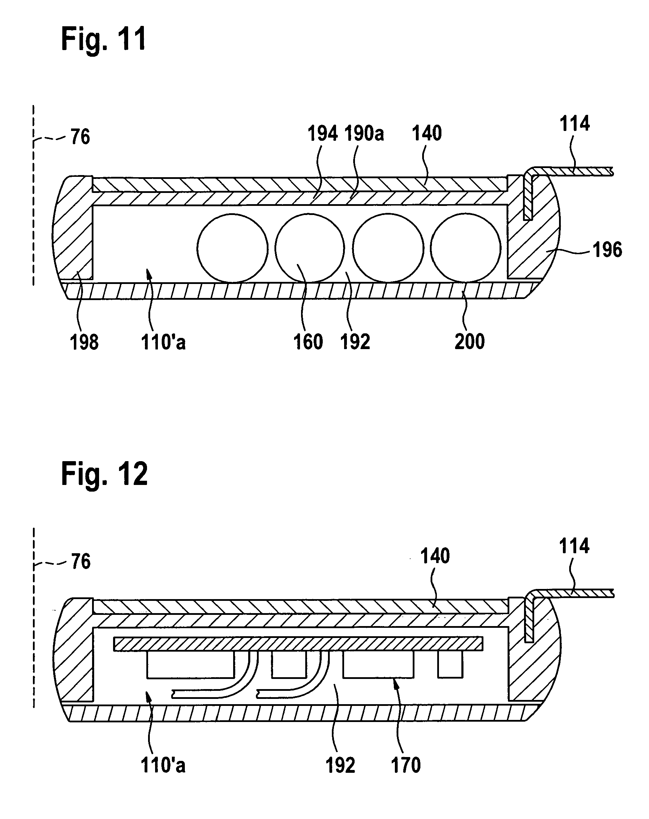

Dadurch, dass die Längsträger 110'a und 110'b verbreitert ausgeführt sind, ergibt sich, wie in Fig. 11 und 12 im Zusammenhang mit dem Längsträger 110'a in Fig. 11 und 12 dargestellt, die Möglichkeit, den Längsträger 110 selbst unmittelbar als Trägergehäuse einzusetzen und in einem Innenraum 192 desselben einerseits die elektrischen Energiespeicher 160 und andererseits die Steuereinheit 170 vorzusehen, welche die gleiche Funktion haben, wie in dem Zusammenhang mit dem ersten Ausführungsbeispiel beschrieben wurde.

Vorzugsweise sind hierzu die Längsträger 110'a und 110'b als verbreitertes Profilrohr mit einer Oberwand 194, Seitenwänden 196 und 198 sowie einem unteren abnehmbaren Deckel 200 ausgebildet, wobei über den abnehmbaren Deckel 200 ein Zugang zu dem Innenraum 192 möglich ist.

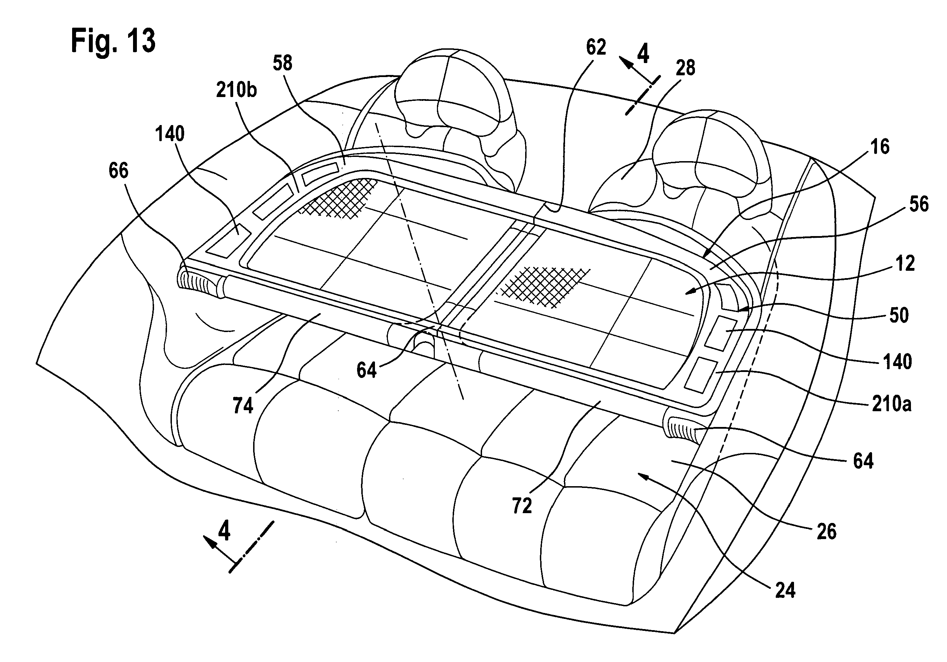

Bei einem dritten Ausführungsbeispiel, dargestellt in Fig. 13, sind im Gegensatz zum zweiten Ausführungsbeispiel nicht Elemente der Windstopbasis 16 verbreitert ausgebildet, sondern Außenbereiche 210a und 210b der C-förmig ausgebildeten Rahmenteile 56 und 58 des Windschottrahmens 50, und diese Außenbereiche 210a, 210b tragen die Solarzellen 140.

Ferner sind auch die Bereiche 210a und 210b der Rahmenteile 56 und 58 entsprechend den Längsträgern 110'a und 110'b des zweiten Ausführungsbeispiels mit einem Innenraum versehen, in welchem die elektrischen Energiespeicher 160 und die Steuereinheit 170 angeordnet sind, hinsichtlich deren Funktion vollinhaltlich auf die Ausführungen zum ersten und zweiten Ausführungsbeispiel Bezug genommen wird.

Im Gegensatz zum ersten und zum zweiten Ausführungsbeispiel sind somit die Solarzellen 140 nicht an der Windstopbasis 16, sondern am bewegbaren Windschott 12 angeordnet. Diese Lösung hat den Vorteil, dass die Solarzellen 140 sowohl in der wirksamen Stellung als auch in der unwirksamen Stellung in optimaler Weise Licht erhalten, da kein Abdecken derselben durch das Windschott 12 in der unwirksamen Stellung erfolgt, wie dies beim ersten und zweiten Ausführungsbeispiel der Fall ist.

Darüber hinaus können bei dem dritten Ausführungsbeispiel auch die elektrischen Energiespeicher 160 nach wie vor in der Windstopbasis 16, beispielsweise in den Windstopbasisteilen 72 und 74, beispielsweise in den vorderen Querträgern 100a und 100b, angeordnet sein, so dass das Gewicht der elektrischen Energiespeicher 160 beim Bewegen des Windschotts 12 von der unwirksamen in die wirksame Stellung keine höhere Leistung des Antriebsmotors 92 erfordert.

Da das Gewicht der Solarzellen 140 im Gegensatz zum Gewicht der elektrischen Energiespeicher 160 keine Bedeutung hat, ist die Gewichtserhöhung im Bereich des Rahmens 50 des Windschotts 12 durch das Anordnen der Solarzellen 140 ohne oder nur von geringer Relevanz.

Im Übrigen sind diejenigen Elemente des dritten Ausführungsbeispiels, die mit denen des ersten oder zweiten Ausführungsbeispiels identisch sind, mit denselben Bezugszeichen versehen, so dass hinsichtlich der Erläuterung derselben vollinhaltlich auf die Ausführungen zu den voranstehenden Ausführungsbeispielen Bezug genommen werden kann.

## Patentansprüche

1. Windstopeinrichtung für Kraftfahrzeuge, insbesondere Cabriofahrzeuge, umfassend eine in Höhe einer Gürtellinie (14) einer Karosserie (10) angeordnete Windstopbasis (16) und ein mit der Windstopbasis (16) gelenkig verbundenes Windschott (12), welches von einer sich ungefähr in Höhe der Gürtellinie (14) der Karosserie (10) erstreckenden unwirksamen Stellung in eine sich über die Gürtellinie (14) erhebenden und quer zu dieser verlaufenden wirksamen Stellung verschwenkbar ist, eine elektrische Antriebseinheit (90), mit welcher das Windschott (12) zwischen der unwirksamen und der wirksamen Stellung relativ zur Windstopbasis (16) bewegbar ist,
**dadurch gekennzeichnet, dass** die Windstopeinrichtung mit einem elektrischen Energiespeicher (160) versehen ist, der elektrische Energie zum Betreiben der elektrischen Antriebseinheit (90) zur Verfügung stellt.

2. Windstopeinrichtung nach Anspruch 1, **dadurch gekennzeichnet, dass** die Windstopeinrichtung mit Solarzellen (140) versehen ist, mit welchen der mindestens eine elektrische Energiespeicher (160) aufladbar ist.

3. Windstopeinrichtung nach Anspruch 2, **dadurch gekennzeichnet, dass** die Solarzellen (140) auf einer der Karosserie (10) abgewandten Seite der Windstopeinrichtung angeordnet sind.

4. Windstopeinrichtung nach einem der Ansprüche 2 bis 3, **dadurch gekennzeichnet, dass** die Solarzellen (140) im Bereich des Windschotts (12) angeordnet sind.

5. Windstopeinrichtung nach Anspruch 4, **dadurch gekennzeichnet, dass** das Windschott (12) einen Rahmen (50) aufweist und dass die Solarzellen (140) an dem Rahmen (50) des Windschotts (12) gehalten sind.

6. Windstopeinrichtung nach Anspruch 5, **dadurch gekennzeichnet, dass** die Solarzellen (140) an dem Rahmen (50) angeordnet sind.

7. Windstopeinrichtung nach Anspruch 6, **dadurch gekennzeichnet, dass** die Solarzellen (140) in einem Rahmenbereich (210) angeordnet sind.

8. Windstopeinrichtung nach einem der Ansprüche 1 bis 3, **dadurch gekennzeichnet, dass** die Solarzellen (140) im Bereich der Windstopbasis (16) angeordnet sind.

9. Windstopeinrichtung nach Anspruch 8, **dadurch gekennzeichnet, dass** die Solarzellen (140) auf einer der Karosserie (10) abgewandten Seite der Windstopbasis (16) angeordnet sind.

10. Windstopeinrichtung nach Anspruch 8 oder 9, **dadurch gekennzeichnet, dass** die Windstopbasis (16) einen Rahmen (70) aufweist und dass die Solarzellen (140) an dem Rahmen (70) gehalten sind.

11. Windstopeinrichtung nach Anspruch 10, **dadurch gekennzeichnet, dass** die Solarzellen (140) an dem Rahmen (70) angeordnet sind.

12. Windstopeinrichtung nach Anspruch 11, **dadurch gekennzeichnet, dass** die Solarzellen (140) an einem Rahmenträger (110') des Rahmens der Windstopbasis angeordnet sind.

13. Windstopeinrichtung nach einem der Ansprüche 10 bis 12, **dadurch gekennzeichnet, dass** der Rahmen (70) Rahmenöffnungen (112) aufweist und dass die Solarzellen (140) im Bereich der Rahmenöffnungen (112) angeordnet sind.

14. Windstopeinrichtung nach Anspruch 13, **dadurch gekennzeichnet, dass** die Solarzellen (140) durch ein die Rahmenöffnungen (112) überdeckendes Flachmaterial (114) abgedeckt sind.

15. Windstopeinrichtung nach Anspruch 14, **dadurch gekennzeichnet, dass** das Flachmaterial (114) zumindest teilweise lichtdurchlässig ist.

16. Windstopeinrichtung nach einem der Ansprüche 14 bis 15, **dadurch gekennzeichnet, dass** das Flachmaterial (114) ein textiles Flachmaterial ist.

17. Windstopeinrichtung nach Anspruch 15 oder 16, **dadurch gekennzeichnet, dass** das Flachmaterial (114) in seinem die Solarzellen (140) überdeckenden Bereich (116) eine erhöhte Lichtdurchlässigkeit aufweist.

18. Windstopeinrichtung nach Anspruch 17, **dadurch gekennzeichnet, dass** das Flachmaterial (114) in seinem die Solarzellen (140) überdeckenden Bereich (116) eine gegenüber anderen Bereichen geringere Fadendichte aufweist.

19. Windstopeinrichtung nach einem der Ansprüche 8 bis 18, **dadurch gekennzeichnet, dass** die Solarzellen (140) in einem Trägergehäuse (130) angeordnet sind.

20. Windstopeinrichtung nach Anspruch 19, **dadurch gekennzeichnet, dass** die Solarzellen (140) in eine Oberseite (132) des Trägergehäuses (130) integriert sind.

21. Windstopeinrichtung nach Anspruch 19 oder 20, **dadurch gekennzeichnet, dass** das Trägergehäuse (130) an dem Rahmen (70) fixiert ist.

22. Windstopeinrichtung nach Anspruch 21, **dadurch gekennzeichnet, dass** das Trägergehäuse (130) lösbar an dem Rahmen (70) fixiert ist.

23. Windstopeinrichtung nach einem der Ansprüche 19 bis 22, **dadurch gekennzeichnet, dass** der mindestens eine elektrische Energiespeicher (160) in dem Trägergehäuse (130) angeordnet ist.

24. Windstopeinrichtung nach einem der Ansprüche 19 bis 23, **dadurch gekennzeichnet, dass** die Windstopbasis (16) zwei Windstopbasisteile (72, 74) aufweist und dass das Trägergehäuse (130) für die Solarzellen (140) mindestens an einem der Windstopbasisteile (72, 74) gehalten ist.

25. Windstopeinrichtung nach einem der Ansprüche 8 bis 18, **dadurch gekennzeichnet, dass** ein bzw. der Rahmen (70) der Windstopbasis (16) einen Trägerbereich (110'a, b) für die Solarzellen (140) bildet.

26. Windstopeinrichtung nach einem der voranstehenden Ansprüche 10 bis 25, **dadurch gekennzeichnet, dass** der Rahmen (70) ein Gehäuse (110'a, b) für den elektrischen Energiespeicher (160) bildet.

27. Windstopeinrichtung nach einem der voranstehenden Ansprüche, **dadurch gekennzeichnet, dass** die Windstopeinrichtung eine Steuereinheit (170) umfasst, welche mindestens einen Ladezustand des mindestens einen Energiespeichers (160) überwacht.

28. Windstopeinrichtung nach Anspruch 27, **dadurch gekennzeichnet, dass** die Steuereinheit (170) eine Funktionssteuerung (172) für das Windschott (12) umfasst.

29. Windstopeinrichtung nach Anspruch 28, **dadurch gekennzeichnet, dass** die Funktionssteuerung (172) mit einer Handbedieneinheit (174, 180) kommuniziert.

30. Windstopeinrichtung nach Anspruch 29, **dadurch gekennzeichnet, dass** die Handbedieneinheit (174) fest an der Windstopeinrichtung angeordnet ist.

31. Windstopeinrichtung nach Anspruch 19 und einem der Ansprüche 27 bis 30, **dadurch gekennzeichnet, dass** die Steuereinheit (170) in dem Trägergehäuse (130) angeordnet ist.

32. Windstopeinrichtung nach einem der Ansprüche 27 bis 31, **dadurch gekennzeichnet, dass** die Steuereinheit (170) in einem Rahmen (50, 70) der Windstopeinrichtung angeordnet ist.

33. Windstopeinrichtung nach einem der Ansprüche 29 bis 32, **dadurch gekennzeichnet, dass** die Handbedieneinheit (174) an der Windstopbasis (16) angeordnet ist.

34. Windstopeinrichtung nach Anspruch 19 und einem der Ansprüche 29 bis 33, **dadurch gekennzeichnet, dass** die Handbedieneinheit (174) in dem Trägergehäuse (130) angeordnet ist.

35. Windstopeinrichtung nach einem der Ansprüche 29 bis 34, **dadurch gekennzeichnet, dass** die Handbedieneinheit (174) an einem Rahmen (50, 70) der Windstopeinrichtung angeordnet ist.

36. Windstopeinrichtung nach einem der Ansprüche 29 bis 35, **dadurch gekennzeichnet, dass** die Funktionssteuerung (172) drahtlos mit der Handbedieneinheit (180) kommuniziert.

37. Windstopeinrichtung nach einem der voranstehenden Ansprüche, **dadurch gekennzeichnet, dass** die elektrische Antriebseinheit (90) an der Windstopbasis (16) angeordnet ist.

38. Windstopeinrichtung nach einem der Ansprüche 1 bis 36, **dadurch gekennzeichnet, dass** die elektrische Antriebseinheit (90) in die Windstopbasis (16) integriert ist.

39. Windstopeinrichtung nach Anspruch 38, **dadurch gekennzeichnet, dass** die Windstopbasis (16) einen Träger (100) aufweist und dass die elektrische Antriebseinheit (90) in einen Bereich des Trägers (100) der Windstopbasis (16) integriert ist.

40. Windstopeinrichtung nach einem der Ansprüche 38 und 39, **dadurch gekennzeichnet, dass** die Windstopbasis zwei Windstopbasisteile (72, 74) aufweist und dass die elektrische Antriebseinheit (90) in eines der Windstopbasisteile (72, 74) integriert ist.

## Claims

1. Windbreak device for motor vehicles, in particular cabriolet vehicles, comprising a windbreak base (16) which is disposed level with a beltline (14) of a vehicle body (10), and a wind deflector (12) which is connected to the windbreak base (16) in an articulated manner and can be pivoted from an inactive position, which extends approximately level with the beltline (14) of the vehicle body (10), into an active position which rises above the beltline (14) and runs transverse with respect to said beltline, and an electric drive unit (90) by which the wind deflector (12) can be moved between the inactive and the active position relative to the windbreak base (16), **characterized in that** the windbreak device is provided with an electrical energy storage means (160) which provides electrical energy for operating the electric drive unit (90).

2. Windbreak device according to Claim 1, **characterized in that** the windbreak device is provided with solar cells (140) by which the at least one electrical energy storage means (160) can be charged.

3. Windbreak device according to Claim 2, **characterized in that** the solar cells (140) are disposed on a side of the windbreak device which faces away from the vehicle body (10).

4. Windbreak device according to either of Claims 2 and 3, **characterized in that** the solar cells (140) are disposed in the region of the wind deflector (12).

5. Windbreak device according to Claim 4, **characterized in that** the wind deflector (12) has a frame (50), and **in that** the solar cells (140) are mounted on the frame (50) of the wind deflector (12).

6. Windbreak device according to Claim 5, **characterized in that** the solar cells (140) are disposed on the frame (50).

7. Windbreak device according to Claim 6, **characterized in that** the solar cells (140) are disposed in a frame region (210).

8. Windbreak device according to any of Claims 1 to 3, **characterized in that** the solar cells (140) are disposed in the region of the windbreak base (16).

9. Windbreak device according to Claim 8, **characterized in that** the solar cells (140) are disposed on a side of the windbreak base (16) which faces away from the vehicle body (10).

10. Windbreak device according to Claim 8 or 9, **characterized in that** the windbreak base (16) has a frame (70), and **in that** the solar cells (140) are mounted on the frame (70).

11. Windbreak device according to Claim 10, **characterized in that** the solar cells (140) are disposed on the frame (70).

12. Windbreak device according to Claim 11, **characterized in that** the solar cells (140) are disposed on a frame support member (110') of the frame of the windbreak base.

13. Windbreak device according to any of Claims 10 to 12, **characterized in that** the frame (70) has frame openings (112), and **in that** the solar cells (140) are disposed in the region of the frame openings (112).

14. Windbreak device according to Claim 13, **characterized in that** the solar cells (140) are covered by a flat material (114) which covers over the frame openings (112).

15. Windbreak device according to Claim 14, **characterized in that** the flat material (114) is at least partially transparent.

16. Windbreak device according to either of Claims 14 and 15, **characterized in that** the flat material (114) is a flat textile material.

17. Windbreak device according to Claim 15 or 16, **characterized in that** the flat material (114) is more transparent in its region (116) which covers over the solar cells (140).

18. Windbreak device according to Claim 17, **characterized in that** the flat material (114) has a lower thread density in its region (116) which covers over the solar cells (140) than in other regions.

19. Windbreak device according to any of Claims 8 to 18, **characterized in that** the solar cells (140) are disposed in a support housing (130).

20. Windbreak device according to Claim 19, **characterized in that** the solar cells (140) are integrated into an upper face (132) of the support housing (130).

21. Windbreak device according to Claim 19 or 20, **characterized in that** the support housing (130) is fixed to the frame (70).

22. Windbreak device according to Claim 21, **characterized in that** the support housing (130) is detachably fixed to the frame (70).

23. Windbreak device according to any of Claims 19 to 22, **characterized in that** the at least one electrical energy storage means (160) is disposed in the support housing (130).

24. Windbreak device according to any of Claims 19 to 23, **characterized in that** the windbreak base (16) has two windbreak base parts (72, 74), and **in that** the support housing (130) for the solar cells (140) is mounted at least on one of the windbreak base parts (72, 74).

25. Windbreak device according to any of Claims 8 to 18, **characterized in that** a frame or the frame (70) of the windbreak base (16) forms a support region (110'a, b) for the solar cells (140).

26. Windbreak device according to any of the preceding Claims 10 to 25, **characterized in that** the frame (70) forms a housing (110'a, b) for the electrical energy storage means (160).

27. Windbreak device according to any of the preceding claims, **characterized in that** the windbreak device comprises a control unit (170), which monitors at least a charge state of the at least one energy storage means (160).

28. Windbreak device according to Claim 27, **characterized in that** the control unit (170) comprises a function control means (172) for the wind deflector (12).

29. Windbreak device according to Claim 28, **characterized in that** the function control means (172) communicates with a manual operator control unit (174, 180).

30. Windbreak device according to Claim 29, **characterized in that** the manual operator control unit (174) is fixedly disposed on the windbreak device.

31. Windbreak device according to Claim 19 and any of Claims 27 to 30, **characterized in that** the control unit (170) is disposed in the support housing (130).

32. Windbreak device according to any of Claims 27 to 31, **characterized in that** the control unit (170) is disposed in a frame (50, 70) of the windbreak device.

33. Windbreak device according to any of Claims 29 to 32, **characterized in that** the manual operator control unit (174) is disposed on the windbreak base (16).

34. Windbreak device according to Claim 19 and any of Claims 29 to 33, **characterized in that** the manual operator control unit (174) is disposed in the support housing (130).

35. Windbreak device according to any of Claims 29 to 34, **characterized in that** the manual operator control unit (174) is disposed on a frame (50, 70) of the windbreak device.

36. Windbreak device according to any of Claims 29 to 35, **characterized in that** the function control means (172) communicates with the manual operator control unit (180) in a wire-free fashion.

37. Windbreak device according to any of the preceding claims, **characterized in that** the electric drive unit (90) is disposed on the windbreak base (16).

38. Windbreak device according to any of Claims 1 to 36, **characterized in that** the electric drive unit (90) is integrated into the windbreak base (16).

39. Windbreak device according to Claim 38, **characterized in that** the windbreak base (16) has a support member (100), and **in that** the electric drive unit (90) is integrated into a region of the support member (100) of the windbreak base (16).

40. Windbreak device according to either of Claims 38 and 39, **characterized in that** the windbreak base has two windbreak base parts (72, 74), and **in that** the electric drive unit (90) is integrated into one of the windbreak base parts (72, 74).

## Revendications

1. Système déflecteur de vent destiné à des véhicules automobiles, en particulier à des véhicules cabriolet, comprenant une base déflectrice de vent (16) disposée à hauteur d'une ligne de ceinture (14) d'une carrosserie (10) et une cloison coupe-vent (12) reliée de manière articulée à la base déflectrice de vent (16), laquelle cloison coupe-vent peut pivoter d'une position inactive s'étendant approximativement à hauteur de la ligne de ceinture (14) de la carrosserie (10) dans une position active se soulevant au-dessus de la ligne de ceinture (14) et s'étendant de manière transversale par rapport à cette dernière, et comprenant une unité d'entraînement (90) électrique, à l'aide de laquelle la cloison coupe-vent (12) peut être déplacée par rapport à la base déflectrice de vent (16) entre la position inactive et la position active,
**caractérisé en ce que** le système déflecteur de vent est pourvu d'un accumulateur d'énergie (160) électrique, qui fournit de l'énergie électrique servant à faire fonctionner l'unité d'entraînement (90) électrique.

2. Système déflecteur de vent selon la revendication 1, **caractérisé en ce que** le système déflecteur de vent est pourvu de cellules solaires (140), à l'aide desquelles l'au moins un accumulateur d'énergie (160) électrique peut être rechargé.

3. Système déflecteur de vent selon la revendication 2, **caractérisé en ce que** les cellules solaires (140) sont disposées sur un côté, opposé à la carrosserie (10), du système déflecteur de vent.

4. Système déflecteur de vent selon l'une quelconque des revendications 2 à 3,
**caractérisé en ce que** les cellules solaires (140) sont disposées dans la zone de la cloison coupe-vent (12).

5. Système déflecteur de vent selon la revendication 4, **caractérisé en ce que** la cloison coupe-vent (12) présente un cadre (50), et **en ce que** les cellules solaires (140) sont maintenues au niveau du cadre (50) de la cloison coupe-vent (12).

6. Système déflecteur de vent selon la revendication 5, **caractérisé en ce que** les cellules solaires (140) sont disposées au niveau du cadre (50).

7. Système déflecteur de vent selon la revendication 6, **caractérisé en ce que** les cellules solaires (140) sont disposées dans une zone de cadre (210).

8. Système déflecteur de vent selon l'une quelconque des revendications 1 à 3, **caractérisé en ce que** les cellules solaires (140) sont disposées dans la zone de la base déflectrice de vent (16).

9. Système déflecteur de vent selon la revendication 8, **caractérisé en ce que** les cellules solaires (140) sont disposées sur un côté, opposé à la carrosserie (10), de la base déflectrice de vent (16).

10. Système déflecteur de vent selon la revendication 8 ou 9, **caractérisé en ce que** la base déflectrice de vent (16) présente un cadre (70), et **en ce que** les cellules solaires (140) sont maintenues au niveau du cadre (70).

11. Système déflecteur de vent selon la revendication 10, **caractérisé en ce que** les cellules solaires (140) sont disposées au niveau du cadre (70).

12. Système déflecteur de vent selon la revendication 11, **caractérisé en ce que** les cellules solaires (140) sont disposées au niveau d'un support de cadre (110') du cadre de la base déflectrice de vent.

13. Système déflecteur de vent selon l'une quelconque des revendications 10 à 12, **caractérisé en ce que** le cadre (70) présente des ouvertures de cadre (112), et **en ce que** les cellules solaires (140) sont disposées dans la zone des ouvertures de cadre (112).

14. Système déflecteur de vent selon la revendication 13, **caractérisé en ce que** les cellules solaires (140) sont dissimulées par un matériau plat (114) recouvrant les ouvertures de cadre (112).

15. Système déflecteur de vent selon la revendication 14, **caractérisé en ce que** le matériau plat (114) est au moins en partie perméable à la lumière.

16. Système déflecteur de vent selon l'une quelconque des revendications 14 à 15,
**caractérisé en ce que** le matériau plat (114) est un matériau plat textile.

17. Système déflecteur de vent selon la revendication 15 ou 16, **caractérisé en ce que** le matériau plat (114) présente, dans sa zone (116) recouvrant les cellules solaires (140), une perméabilité à la lumière élevée.

18. Système déflecteur de vent selon la revendication 17, **caractérisé en ce que** le matériau plat (114) présente, dans sa zone (116) recouvrant les cellules solaires (140), une densité de fil inférieure par rapport à celle d'autres zones.

19. Système déflecteur de vent selon l'une quelconque des revendications 8 à 18, **caractérisé en ce que** les cellules solaires (140) sont disposées dans un boîtier de support (130).

20. Système déflecteur de vent selon la revendication 19, **caractérisé en ce que** les cellules solaires (140) sont intégrées dans un côté supérieur (132) du boîtier de support (130).

21. Système déflecteur de vent selon la revendication 19 ou 20, **caractérisé en ce que** le boîtier de support (130) est fixé au niveau du cadre (70).

22. Système déflecteur de vent selon la revendication 21, **caractérisé en ce que** le boîtier de support (130) est fixé de manière amovible au niveau du cadre (70).

23. Système déflecteur de vent selon l'une quelconque des revendications 19 à 22, **caractérisé en ce que** l'au moins un accumulateur d'énergie (160) électrique est disposé dans le boîtier de support (130).

24. Système déflecteur de vent selon l'une quelconque des revendications 19 à 23, **caractérisé en ce que** la base déflectrice de vent (16) présente deux parties de base déflectrice de vent (72, 74), et **en ce que** le boîtier de support (130) est maintenu pour les cellules solaires (140) au moins au niveau d'une des parties de base déflectrice de vent (72, 74).

25. Système déflecteur de vent selon l'une quelconque des revendications 8 à 18, **caractérisé en ce que** le cadre (70) de la base déflectrice de vent (16) forme une zone de support (110'a, b) pour les cellules solaires (140).

26. Système déflecteur de vent selon l'une quelconque des revendications 10 à 25,
**caractérisé en ce que** le cadre (70) forme un boîtier (110'a, b) pour l'accumulateur d'énergie (160) électrique.

27. Système déflecteur de vent selon l'une quelconque des revendications précédentes, **caractérisé en ce que** le système déflecteur de vent comprend une unité de commande (170), qui surveille au moins un état de charge de l'au moins un accumulateur d'énergie (160).

28. Système déflecteur de vent selon la revendication 27, **caractérisé en ce que** l'unité de commande (170) comprend une commande de fonction (172) pour la cloison coupe-vent (12).

29. Système déflecteur de vent selon la revendication 28, **caractérisé en ce que** la commande de fonction (172) communique avec une unité d'utilisation manuelle (174, 180).

30. Système déflecteur de vent selon la revendication 29, **caractérisé en ce que** l'unité d'utilisation manuelle (174) est disposée de manière fixe au niveau du système déflecteur de vent.

31. Système déflecteur de vent selon la revendication 19 et selon l'une quelconque des revendications 27 à 30, **caractérisé en ce que** l'unité de commande (170) est disposée dans le boîtier de support (130).

32. Système déflecteur de vent selon l'une quelconque des revendications 27 à 31, **caractérisé en ce que** l'unité de commande (170) est disposée dans un cadre (50, 70) du système déflecteur de vent.

33. Système déflecteur de vent selon l'une quelconque des revendications 29 à 32, **caractérisé en ce que** l'unité d'utilisation manuelle (174) est disposée au niveau de la base déflectrice de vent (16).

34. Système déflecteur de base selon la revendication 19 et selon l'une quelconque des revendications 29 à 33, **caractérisé en ce que** l'unité d'utilisation manuelle (174) est disposée dans le boîtier de support (130).

35. Système déflecteur de vent selon l'une quelconque des revendications 29 à 34, **caractérisé en ce que** l'unité d'utilisation manuelle (174) est disposée au niveau d'un cadre (50, 70) du système déflecteur de vent.

36. Système déflecteur de vent selon l'une quelconque des revendications 29 à 35, **caractérisé en ce que** la commande de fonction (172) communique sans fil avec l'unité d'utilisation manuelle (180).

37. Système déflecteur de vent selon l'une quelconque des revendications précédentes, **caractérisé en ce que** l'unité d'entraînement (90) électrique est disposée au niveau de la base déflectrice de vent (16).

38. Système déflecteur de vent selon l'une quelconque des revendications 1 à 36, **caractérisé en ce que** l'unité d'entraînement (90) électrique est intégrée dans la base déflectrice de vent (16).

39. Système déflecteur de vent selon la revendication 38, **caractérisé en ce que** la base déflectrice de vent (16) présente un support (100), et **en ce que** l'unité d'entraînement (90) électrique est intégrée dans une zone du support (100) de la base déflectrice de vent (16).

40. Système déflecteur de vent selon l'une quelconque des revendications 38 et 39, **caractérisé en ce que** la base déflectrice de vent présente deux parties de base déflectrice de vent (72, 74), et **en ce que** l'unité d'entraînement (90) électrique est intégrée dans l'une des parties de base déflectrice de vent (72, 74).
